# EUROPÄISCHE PATENTANMELDUNG

(11) **EP 4 054 144 A1**
(43) Veröffentlichungstag der Anmeldung: **07.09.2022**
(21) Anmeldenummer: 21160563.9
(22) Anmeldetag: 03.03.2021
(51) Int. Cl.: H04L 29/06, H04W 12/069, H04W 12/10

(54) **VERFAHREN UND SYSTEM ZUR GESICHERTEN DATENÜBERTRAGUNG**

(71) Anmelder: ise Individuelle Software und Elektronik GmbH, 26122 Oldenburg (DE)
(72) Erfinder: KESSLER, Jan, 26129 Oldenburg (DE)
(74) Vertreter: Angerhausen, Christoph

(57) **Zusammenfassung**

Die Erfindung betrifft ein Verfahren, umfassend: durch ein erstes Gerät Erzeugen einer ersten Session-ID anhand einer Client-ID und Senden der ersten Session-ID über eine erste Verbindung an ein zweites Gerät; durch das zweite Gerät Anwenden eines ersten Schlüssels auf die erste Session-ID und eine Challenge, Speichern der Challenge, und Senden der mit dem ersten Schlüssel bearbeiteten Daten über die erste Verbindung an das erste Gerät; durch das erste Gerät Senden der bearbeiteten Daten sowie der Client-ID über eine zweite Verbindung an ein drittes Gerät; durch das dritte Gerät Prüfen der Authentizität der bearbeiteten Daten unter Verwendung des ersten Schlüssels, Erzeugen einer zweiten Session-ID anhand der Client-ID, Vergleichen der zweiten Session-ID mit der ersten Session-ID, Prüfen, ob eine Ressource freigegeben wird, Erzeugen eines zweiten Schlüssels, Verschlüsseln des zweiten Schlüssels mit dem ersten Schlüssel und Anwenden des ersten Schlüssels auf die Challenge und den verschlüsselten zweiten Schlüssel, und Senden der mit dem ersten Schlüssel bearbeiteten Daten sowie des unverschlüsselten zweiten Schlüssels über die zweite Verbindung an das erste Gerät; durch das erste Gerät Senden der bearbeiteten Daten über die erste Verbindung an das zweite Gerät; durch das zweite Gerät Prüfen der Authentizität der bearbeiteten Daten durch Anwenden des ersten Schlüssels, Vergleichen der Challenge mit der gespeicherten Challenge, Entschlüsseln des zweiten Schlüssels, Verschlüsseln einer Ressource mit dem zweiten Schlüssel, und Senden der Ressource über die erste Verbindung an das erste Gerät.

## Beschreibung

### TECHNISCHES GEBIET

Die hier offenbarte Erfindung liegt auf dem Gebiet der Datenübertragung zwischen zwei Geräten, insbesondere zum Zweck der Freigabe einer Ressource zur Verwendung durch eines der Geräte, wobei die Freigabe einer Prüfung durch ein drittes Gerät unterliegt.

### HINTERGRUND

Geräte können in einem Netzwerk von anderen Geräten die Freigabe bestimmter Ressourcen anfordern. Beispiele für solche Anfragen (request) sind das Aufrufen einer Internetseite, der Zugriff auf bestimmte Dateien, das Versenden einer Email, etc. Viele solcher Anfragen werden nur nach einer Prüfung durch die Gegenseite beantwortet, um unbefugten Zugriff auf Daten zu verhindern. Zur Prüfung der Anfrage greift das prüfende Gerät üblicherweise auf bestimmte Dienste zu, die von einem dritten Gerät bereitgestellt werden. Idealerweise sind sämtliche Kommunikationswege, also sowohl zwischen den beiden verhandelnden Geräten als auch zwischen dem prüfenden Gerät und dem Dienstanbieter, verschlüsselt, oder es handelt sich um direkte Verbindungen, deren Nachrichten keine weiteren zwischengeschalteten Rechner (hops) passieren.

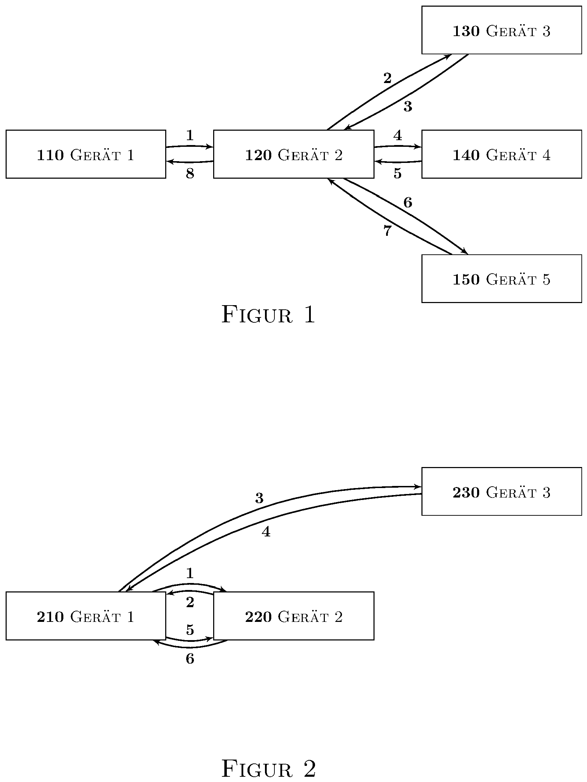

Figur 1 zeigt beispielhaft die Bearbeitung einer Anfrage eines Geräts anhand Aufrufen von mehreren Diensten. Ein erstes Gerät 110 sendet eine Anfrage (1) an ein zweites Gerät 120. Das zweite Gerät 120 kommuniziert (2, 3, 4, 5, 6, 7) mit Diensten weiterer Geräte 130, 140, 150, etwa um Berechtigungen zur Nutzung angefragter Ressourcen zu prüfen, und liefert (8) schließlich die angefragte Ressource an das erste Gerät 110. Die Sicherheit der Daten in allen gezeigten Verbindungen (1-8) beruht auf einer Verschlüsselung auf der Transportschicht und/oder auf Verwendung von direkten Verbindungen zwischen den paarweise kommunizierenden Geräten.

Mit dem in Figur 1 gezeigten Vorgehen kann jedoch die Sicherheit der Verbindungen nicht gewährleistet werden, wenn direkte Verbindungen nicht möglich sind oder wenn die üblicherweise verwendete asymmetrische Verschlüsselung nicht durchgeführt werden kann, etwa weil die kommunizierenden Geräte 110 oder 120 die hierfür erforderlichen Ressourcen oder Rechenleistung nicht aufbringen oder eine Begrenzung der Nachrichtenlänge keinen hinreichend sicheren Schlüsselaustausch ermöglicht.

Der Erfindung liegt somit die Aufgabe zugrunde, einem Gerät, beispielsweise dem Gerät 220 in Figur 2, die Möglichkeit zu geben, ein anfragendes Gerät, etwa Gerät 210, zu autorisieren, ohne asymmetrische Verschlüsselung oder gesicherte beziehungsweise direkte Verbindungen zu weiteren Geräten zu benutzen, die für eine solche Autorisierung erforderliche Daten bereithalten.

Ein Gerät im Sinne der vorliegenden Erfindung ist eine netzwerkfähige Einrichtung, beispielsweise ein Computer, Smartphone, Notebook. Anwendungsgebiete der Erfindung liegen insbesondere in der Gebäudeautomation, so dass das Gerät auch netzwerkfähige Aktuatoren, Schaltelemente, Lautsprecher, etc. umfasst, insbesondere auch Geräte mit reduziertem Leistungsumfang (Rechenleistung, Arbeitsspeicher, Batteriebetrieb), die zwar netzwerkfähig sind, aber keine aufwendigen (asymmetrischen) Verschlüsselungstechniken ausführen können.

### ZUSAMMENFASSUNG

Ausführungsformen der Erfindung betreffen ein Verfahren, umfassend: durch ein erstes Gerät Erzeugen einer ersten Session-ID anhand einer Client-ID und Senden der ersten Session-ID über eine erste Verbindung an ein zweites Gerät; durch das zweite Gerät Anwenden eines ersten Schlüssels auf die erste Session-ID und eine Challenge, Speichern der Challenge, und Senden der mit dem ersten Schlüssel bearbeiteten Daten über die erste Verbindung an das erste Gerät; durch das erste Gerät Senden der bearbeiteten Daten sowie der Client-ID über eine zweite Verbindung an ein drittes Gerät; durch das dritte Gerät Prüfen der Authentizität der bearbeiteten Daten unter Verwendung des ersten Schlüssels, Erzeugen einer zweiten Session-ID anhand der Client-ID, Vergleichen der zweiten Session-ID mit der ersten Session-ID, Prüfen, ob eine Ressource freigegeben wird, Erzeugen eines zweiten Schlüssels, Verschlüsseln des zweiten Schlüssels mit dem ersten Schlüssel und Anwenden des ersten Schlüssels auf die Challenge und den verschlüsselten zweiten Schlüssel, und Senden der mit dem ersten Schlüssel bearbeiteten Daten sowie des unverschlüsselten zweiten Schlüssels über die zweite Verbindung an das erste Gerät; durch das erste Gerät Senden der bearbeiteten Daten über die erste Verbindung an das zweite Gerät; durch das zweite Gerät Prüfen der Authentizität der bearbeiteten Daten durch Anwenden des ersten Schlüssels, Vergleichen der Challenge mit der gespeicherten Challenge, Entschlüsseln des zweiten Schlüssels, Verschlüsseln einer Ressource mit dem zweiten Schlüssel, und Senden der Ressource über die erste Verbindung an das erste Gerät.

Vorzugsweise umfasst das Verfahren ferner Entschlüsseln der Ressource unter Verwendung des zweiten Schlüssels durch das erste Gerät.

Insbesondere umfasst das Senden der ersten Session-ID durch das erste Gerät an das zweite Gerät auch Senden einer Angabe einer angeforderten Ressource, und das Prüfen der Freigabe durch das dritte Gerät wird ferner anhand der Angabe der Ressource vorgenommen.

Das Senden der vom zweiten Gerät bearbeiteten Daten durch das erste Gerät an das dritte Gerät kann ferner Senden eines Identifikationsmerkmals des zweiten Geräts umfassen, wobei das Prüfen durch das dritte Gerät, ob eine Ressource freigegeben wird, ferner anhand des Identifikationsmerkmals des zweiten Geräts vorgenommen wird, und/oder wobei das dritte Gerät den ersten Schlüssel anhand des Identifikationsmerkmals identifiziert.

Gegebenenfalls ist die erste Verbindung in der Transportschicht ungesichert und die zweite Verbindung in der Transportschicht mittels Verschlüsselung gesichert.

Das Anwenden des ersten Schlüssels kann Signieren, Verschlüsseln und/oder Erzeugen eines MAC (Message Authentication Code) umfassen.

Zweckmäßigerweise umfasst das Erzeugen der Session-IDs Anwenden einer Einwegfunktion.

Vorteilhafterweise ist die Client-ID ein Schlüssel und umfasst das Erzeugen der Session-IDs Verschlüsseln einer vorbestimmten Konstante unter Verwendung der Client-ID.

Ferner kann die Client-ID eine Zufallszahl sein.

In bestimmten Ausführungsformen enthält die Challenge einen Zeitstempel, und das Vergleichen der Challenge mit der gespeicherten Challenge umfasst eine Prüfung des Alters des Zeitstempels.

In weiteren Beispielen kann das Vergleichen der Challenge mit der gespeicherten Challenge umfassen, die Challenge mit mehreren Challenges in dem zweiten Gerät zu vergleichen, wobei jede der Challenges einer jeweiligen Anforderung eines Geräts entspricht.

Zudem kann der erste Schlüssel eine symmetrische Verschlüsselung ermöglichen und herstellerseitig in dem zweiten und dem dritten Gerät gespeichert sein oder vor Durchführung des Verfahrens durch eine temporäre direkte Verbindung zwischen dem zweiten und dem dritten Gerät übermittelt werden.

Vorzugsweise erfolgt das Erzeugen der ersten Session-ID und das Erzeugen der zweiten Session-ID durch einen gleichen vorbestimmten Algorithmus.

Insbesondere ist der Algorithmus in dem ersten Gerät und dem dritten Gerät herstellerseitig eingestellt oder wird vor Durchführung des Verfahrens durch eine direkte Verbindung zwischen dem ersten Gerät und dem dritten Gerät übermittelt oder eingestellt.

Ausführungsformen der Erfindung betreffen ferner ein System, umfassend: ein erstes Gerät, ein zweites Gerät, ein drittes Gerät; wobei das erste Gerät mit dem zweiten und dem dritten Gerät verbunden ist; wobei das erste Gerät eingerichtet ist, anhand einer Client-ID eine erste Session-ID zu erzeugen und die erste Session-ID an das zweite Gerät zu senden; wobei das zweite Gerät eingerichtet ist, einen ersten Schlüssel auf die erste Session-ID und eine Challenge anzuwenden, die Challenge zu speichern und die mit dem ersten Schlüssel bearbeiteten Daten an das erste Gerät zu senden; wobei das erste Gerät ferner eingerichtet ist, die bearbeiteten Daten sowie die Client-ID an das dritte Gerät zu senden; wobei das dritte Gerät eingerichtet ist, die Authentizität der bearbeiteten Daten unter Verwendung des ersten Schlüssel zu prüfen, anhand der Client-ID eine zweite Session-ID zu erzeugen, die zweite Session-ID mit der ersten Session-ID zu vergleichen, einen zweiten Schlüssel zu erzeugen, den zweiten Schlüssel unter Verwendung des ersten Schlüssels zu verschlüsseln, den ersten Schlüssel auf die Challenge und den verschlüsselten zweiten Schlüssel anzuwenden, und die mit dem ersten Schlüssel bearbeiteten Daten und den unverschlüsselten zweiten Schlüssel an das erste Gerät zu senden; wobei das erste Gerät ferner eingerichtet ist, die bearbeiteten Daten an das zweite Gerät zu senden; und wobei das zweite Gerät ferner eingerichtet ist, die Authentizität der bearbeiteten Daten durch Anwenden des ersten Schlüssels zu prüfen, die Challenge mit der gespeicherten Challenge zu vergleichen, den zweiten Schlüssel unter Verwendung des ersten Schlüssels zu entschlüsseln und eine Ressource mit dem zweiten Schlüssel zu verschlüsseln und an das erste Gerät zu senden.

Weitere Ausführungsformen betreffen ein computerlesbares Medium mit darauf gespeicherten Befehlen, die bei ihrer Ausführung durch einen Prozessor die hier beschriebenen Verfahren durchführen.

### KURZE BESCHREIBUNG DER ZEICHNUNGEN

Figur 1 zeigt ein herkömmliches System zur abgesicherten Bearbeitung einer Anfrage.
Figur 2 zeigt ein erfindungsgemäßes System zur abgesicherten Bearbeitung einer Anfrage.
Figur 3 zeigt ein Sequenzdiagramm für ein erfindungsgemäßes Verfahren.
Figur 4 zeigt eine Tabelle zur Veranschaulichung von bestimmten erfindungsgemäß verwendeten Daten.

### AUSFÜHRLICHE BESCHREIBUNG

Figur 2 zeigt ein erfindungsgemäßes System, umfassend ein erstes Gerät 210, das mit einem zweiten Gerät 220 verbunden ist. Die Verbindung kann wahlweise gesichert oder ungesichert sein, also in der Transportschicht verschlüsselt werden oder nicht. Die Erfindung ermöglicht eine sichere Autorisierung des ersten Geräts 210 durch das zweite Gerät 220 selbst bei fehlender Verschlüsselung der Verbindung. Figur 2 zeigt ferner ein drittes Gerät 230.

Die Erfindung ermöglicht dem zweiten Gerät 220 die Autorisierung des ersten Geräts 210, wobei Daten, die zur Autorisierung erforderlich sind, nicht auf dem zweiten Gerät 220, sondern lediglich auf dem dritten Gerät 230 vorliegen. Jedoch ist eine gesicherte direkte Verbindung zwischen dem zweiten Gerät 220 und dem dritten Gerät 230 in der gegebenen Konstellation nicht möglich oder soll vermieden werden.

Erfindungsgemäß wird das Authentifizierungsproblem durch Kommunikation des zweiten Geräts 220 mit dem dritten Gerät 230 über das erste Gerät 210 gelöst.

Das erste Gerät 210 erstellt zunächst eine Session-ID aus einer Client-ID. Beispielsweise ist die Client-ID eine Zufallszahl, und die Session-ID wird anhand einer Einwegfunktion erzeugt. Beispielsweise kann die Client-ID ein Schlüssel sein, der auf eine Konstante angewendet wird, um die Session-ID zu erzeugen. In Schritt 1 wird die Session-ID an das zweite Gerät 220 gesendet. Die Session-ID kann ungesichert übertragen werden und ist offen einsehbar. Das Übersenden der Session-ID stellt eine Anforderung des ersten Geräts 210 zur Autorisierung dar, Zugriff auf eine bestimmte Ressource zu erhalten, die von dem zweiten Gerät 220 bereitgestellt wird. Beispiele für Ressourcen sind bestimmte angeforderte Daten oder die Nutzung eines Dienstes, der von dem zweiten Gerät 220 bereitgestellt wird. Steht lediglich eine einzelne Ressource zur Verfügung, genügt das Übersenden der Session-ID. Jedoch umfasst die Erfindung auch Ausführungsformen, in denen mehrere Ressourcen zur Verfügung stehen. In diesem Fall übersendet das erste Gerät mit der Session-ID auch eine Angabe über die angeforderte Ressource, beispielsweise den Namen einer Datei, die Größe eines Speicherplatzes, die Adresse einer Website, etc.

Das zweite Gerät 220 kann die Session-ID in einer Datenstruktur auf die Adresse des ersten Geräts 210 abbilden, um dieses im weiteren Verlauf zuordnen zu können. Zu diesem Zweck kann die Datenstruktur weitere Einträge enthalten, beispielsweise die angeforderte Ressource, den Stand des Antrags (laufend/erledigt), einen Zeitstempel, etc.

Das zweite Gerät 220 antwortet auf den Erhalt der Session-ID mit dem Erstellen einer Challenge. Eine Challenge ist beispielsweise eine Zufallszahl, auch als Nonce bezeichnet. Das zweite Gerät 220 erstellt ein Datenpaket, das die Session-ID und Challenge enthält und wendet auf dieses einen Schlüssel an, der vorzugsweise symmetrisch ist. Beispielsweise kann das Datenpaket signiert und/oder verschlüsselt werden. Zusätzlich oder alternativ kann ein MAC (Message Authentication Code beziehungsweise Nachrichtenauthentifizierungscode) die Integrität und Authentizität der Daten sichern. Das zweite Gerät 220 sendet die derart bearbeiteten Daten in Schritt 2 an das erste Gerät 210 zurück. Dieses sendet die bearbeiteten Daten und zusätzlich die Client-ID in Schritt 3 an das dritte Gerät 230.

In bestimmten Ausführungsformen kann das erste Gerät zusätzlich zu den bearbeiteten Daten und der Client-ID auch ein Identifikationsmerkmal des zweiten Geräts an das dritte Gerät senden; hierdurch wird das dritte Gerät in die Lage versetzt, zwischen mehreren möglichen zweiten Geräten zu unterscheiden. Als Identifikationsmerkmal eignet sich beispielsweise ein Bezeichner, eine Seriennummer oder eine IP- oder sonstige Adresse des betreffenden Geräts.

Die Verbindung zwischen dem ersten Gerät 210 und dem dritten Gerät 230 ist vorzugsweise in der Transportschicht verschlüsselt. In Ausführungsformen, die eine Übersendung einer Angabe der Ressource in Schritt 1 umfassen, wird diese Angabe in den Schritten 2 und 3 an das dritte Gerät gesendet, wobei die Angabe in Kombination mit den übrigen übertragenen Daten mittels des ersten Schlüssels bearbeitet und somit gesichert wird.

Das dritte Gerät 230 ist im Besitz des erwähnten Schlüssels und wendet diesen an, um die Authentizität der erhaltenen Daten zu prüfen beziehungsweise gegebenenfalls zu entschlüsseln. Das Prüfen der Authentizität kann Prüfen einer Signatur, Entschlüsseln der Daten oder auch Prüfen eines MAC umfassen. Das dritte Gerät 230 verfügt ferner über die eingangs von dem ersten Gerät 210 verwendete Funktion zur Erzeugung der Session-ID anhand der Client-ID. Schlüssel und Funktion können herstellerseitig voreingestellt oder vorab zwischen dem ersten Gerät 210 und dem dritten Gerät 230 ausgetauscht worden sein. Derart ausgetauschte Daten werden auch als pre-shared key/ pre-shared function bezeichnet. In Ausführungsformen mit übersendetem Identifikationsmerkmal kann das dritte Gerät den Schlüssel und/oder die Funktion anhand des Identifikationsmerkmals des zweiten Geräts ermitteln, beispielsweise durch Abrufen des Schlüssels/der Funktion aus einer Datenstruktur, die diese aufeinander abbildet.

Das dritte Gerät 230 erzeugt unter Anwendung der Funktion auf die Client-ID eine Session-ID, die es mit der Session-ID des ersten Geräts 210 aus den vom zweiten Gerät 220 bearbeiteten Daten vergleicht.

Stimmen die Session-IDs überein, ist das erste Gerät 210 gegenüber dem dritten Gerät 230 authentifiziert. Das dritte Gerät 230 prüft nun, ob eine angeforderte Ressource für das erste Gerät 210 freizugeben ist; zur Identifizierung des ersten Gerätes 210 kann das dritte Gerät 230 hierbei auf dessen Client-ID, optional auch auf eine entsprechende mitgelieferte oder bei Bedarf von dem zweiten Gerät 220 abgerufene Adresse zurückgreifen. Nach der Prüfung erzeugt das dritte Gerät 230 einen zweiten Schlüssel, der vorzugsweise ebenfalls symmetrisch ist und der späteren Verwendung durch das zweite Gerät 220 dient, um die angeforderte Ressource freizugeben. Dieser Schlüssel wird in dem dritten Gerät 230 unter Anwendung des ersten Schlüssels verschlüsselt. Anschließend wird auf den verschlüsselten zweiten Schlüssel gemeinsam mit der Challenge der erste Schlüssel angewendet, beispielsweise im Wege einer Verschlüsselung oder Signierung. In Schritt 4 werden die mit dem ersten Schlüssel bearbeiteten Daten sowie zusätzlich unverschlüsselt der zweite Schlüssel an das erste Gerät 210 zurückgesendet.

Das erste Gerät 120 verfügt nicht über den ersten Schlüssel und ist somit nicht in der Lage, die übersendeten Daten des dritten Geräts 230 zu manipulieren oder vorzutäuschen. Das erste Gerät 220 leitet die verschlüsselten Daten in Schritt 5 an das zweite Gerät weiter, behält jedoch den unverschlüsselt übersendeten zweiten Schlüssel.

Das zweite Gerät 220 prüft die Authentizität der Challenge durch Anwenden des ersten Schlüssels und vergleicht die Challenge mit der ursprünglichen Challenge. Stimmen beide überein, ist gewährleistet, dass die Sendung von dem dritten Gerät 230 stammt.

Sicherheit wird auf beiden Seiten (zweites und drittes Gerät) auch dadurch gewährleistet, dass beide Geräte den gleichen ersten Schlüssel zur erfolgreichen Entschlüsselung auf die jeweiligen Daten anwenden können.

Das zweite Gerät verschlüsselt die angeforderte Ressource mit dem unter Anwendung des ersten Schlüssels entschlüsselten zweiten Schlüssel und übersendet die verschlüsselten Daten an das erste Gerät 210, wo die Ressource unter Anwendung des in Schritt 4 erhaltenen zweiten Schlüssels entschlüsselt wird.

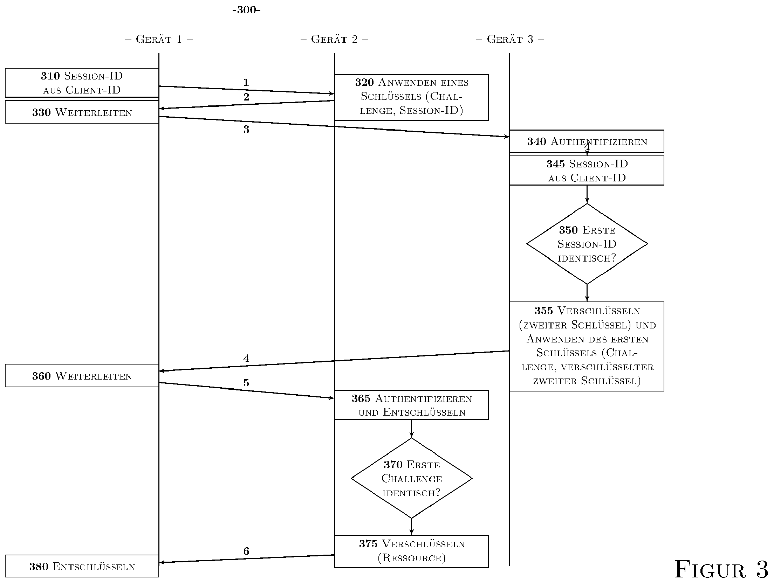

Figur 3 zeigt ein Sequenzdiagramm, das ein erfindungsgemäßes Verfahren 300 darstellt. Die von den drei Geräten 210, 220, 230 ausgeführten Schritte sind spaltenweise je Gerät gezeigt. Die in Figur 2 gezeigten Schritte 1 bis 6, die die Übertragungen von Daten zwischen den Geräten bezeichnen, sind in Figur 3 als Kantenbezeichnungen abgebildet.

Das erste Gerät beginnt in Schritt 310 mit Erzeugen einer Session-ID aus einer Client-ID und sendet die Session-ID in Übertragungsschritt 1 an das zweite Gerät. In einer Ausführungsform sendet das erste Gerät außerdem eine Angabe über die angeforderte Ressource. In dem zweiten Gerät wird die Session-ID optional gespeichert und in Schritt 320 eine Challenge erzeugt. Bei der Challenge handelt es sich vorzugsweise um eine Zufallszahl, die jedoch in Ausführungsformen betreffend das Zuordnen von Geräten/Anforderungen/Ressourcen um einen Zeitstempel ergänzt sein kann. Das zweite Gerät wendet auf Session-ID und Challenge einen ersten Schlüssel an und sendet die so bearbeiteten Daten in Übertragungsschritt 2 an das erste Gerät, optional mit der erwähnten Angabe der angeforderten Ressource. Die Verbindung der Übertragungsschritte 1 und 2 kann gesichert oder ungesichert sein. Der verwendete Schlüssel ist vorzugsweise ein symmetrischer Schlüssel, der als pre-shared key auch dem dritten Gerät bekannt ist. Zwischen dem zweiten und dem dritten Gerät besteht keine direkte (gesicherte) Verbindung.

Das erste Gerät sendet die bearbeiteten Daten ergänzt um seine Client-ID in Schritt 330 an das dritte Gerät. In einer Ausführungsform wird hierbei auch ein Identifikationsmerkmal des zweiten Geräts übersendet, beispielsweise eine Seriennummer oder eine Adresse, um das dritte Gerät in die Lage zu versetzen, das zweite Gerät unter mehreren Geräten zu identifizieren.

Die Verbindung zwischen dem ersten und dem dritten Gerät (Datenübertragungsschritt 3) ist vorzugsweise auf der Transportschicht verschlüsselt. In Ausführungsformen mit mehreren möglichen Ressourcen umfassen die Übertragungsschritte 2 und 3 auch das Übersenden der Angabe der angeforderten Ressource.

Das dritte Gerät prüft die Authentizität der empfangenen Daten in Schritt 340 unter Verwendung des ersten Schlüssels, beispielsweise durch Entschlüsseln oder Prüfen einer Signatur. In Ausführungsformen mit mehreren möglichen zweiten Geräten ermittelt das dritte Gerät anhand des Identifikationsmerkmals des zweiten Geräts den ersten Schlüssel aus einer Datenstruktur, die Schlüssel auf Identifikationsmerkmale abbildet.

Die zusätzlich empfangene Client-ID wird in Schritt 345 verwendet, um eine zweite Session-ID zu rekonstruieren. Hierbei greift das dritte Gerät auf einen Einwegalgorithmus (Hashfunktion oder Verschlüsselung einer Konstante anhand der Client-ID) zurück, der ebenso wie der erste Schlüssel als pre-shared secret oder per Herstellereinstellung vorbestimmt ist. Auch der Einwegalgorithmus kann, in Ausführungsformen mit mehreren möglichen zweiten Geräten und übersendetem Identifikationsmerkmal, in der bereits erwähnten Datenstruktur ermittelt werden. Das Ergebnis wird in Schritt 350 mit der ursprünglichen Session-ID des ersten Geräts aus den empfangenen Daten verglichen.

Sind die Session-IDs identisch, prüft das dritte Gerät zunächst, ob die angeforderte Ressource freigegeben werden soll. Hierbei kann das erste Gerät durch seine Client-ID und gegebenenfalls durch seine Adresse - entweder mitgeliefert oder bei Bedarf von dem zweiten Gerät abgerufen - identifiziert werden. In Ausführungsformen mit mehreren Ressourcen, die unterschieden werden müssen, verwendet das dritte Gerät zur Prüfung der Freigabe die bereits erwähnte Angabe der angeforderten Ressource.

Das dritte Gerät erzeugt anschließend - bei positivem Ergebnis der Prüfung - einen zweiten, vorzugsweise symmetrischen, Schlüssel und verschlüsselt diesen in Schritt 355 unter Verwendung des ersten Schlüssels. Der verschlüsselte Schlüssel wird anschließend gemeinsam mit der Challenge unter erneuter Verwendung des ersten Schlüssels abgesichert, also beispielsweise signiert oder verschlüsselt. In Übertragungsschritt 4 werden die derart bearbeiteten Daten sowie unverschlüsselt der zweite Schlüssel übertragen; der zweite Schlüssel wird also sowohl verschlüsselt als auch unverschlüsselt übertragen.

Das erste Gerät leitet die bearbeiteten Daten in Schritt 360 an das zweite Gerät weiter (Übertragungsschritt 5), speichert jedoch den ebenfalls erhaltenen zweiten Schlüssel zur späteren Verwendung. In Schritt 365 prüft das zweite Gerät unter Anwendung des ersten Schlüssels die Authentizität der erhaltenen Daten, beispielsweise durch Entschlüsseln oder durch Verifizieren einer Signatur, und vergleicht das Ergebnis in Schritt 370 mit der ursprünglichen Challenge. In Ausführungsformen mit mehreren Geräten/Anforderungen/Ressourcen umfasst dieser Vergleich sämtliche gespeicherten Challenges, um die zugeordnete Challenge und damit das entsprechende Gerät, dessen Anforderung und die geforderte Ressource zu identifizieren. In Ausführungsformen mit Zeitstempel kann außerdem eine Prüfung durchgeführt werden, um festzustellen, ob ein vorbestimmtes Höchstalter der Challenge überschritten wurde. Dieses vorbestimmte Höchstalter kann fest eingestellt oder alternativ dynamisch aus Erfahrungswerten erzeugt werden; beispielsweise kann das zweite Gerät nach mehreren Durchläufen des Verfahrens 300 die gemessenen Alter der Challenges mitteln und als Höchstwert einen darüber liegenden Wert festsetzen, beispielsweise auf 150 Prozent. Diese Festsetzung kann nach erstmaligem Festsetzen nach jedem Durchlauf oder mehreren Durchläufen des Verfahrens 300 wiederholt werden. Unabhängig von einem Zeitstempel kann die Challenge auch eine Adresse des betreffenden Gerätes enthalten. Das genannte Höchstalter kann zusätzlich oder alternativ auf eine Zeitspanne gesetzt werden, innerhalb der es mit herkömmlichen Mitteln nicht möglich ist, einen der Schlüssel oder der Funktionen durch reverse engineering zu berechnen.

In Schritt 375 verschlüsselt das zweite Gerät schließlich die angeforderte Ressource unter Verwendung des zweiten Schlüssels und sendet sie an das erste Gerät, das die Sendung entschlüsselt.

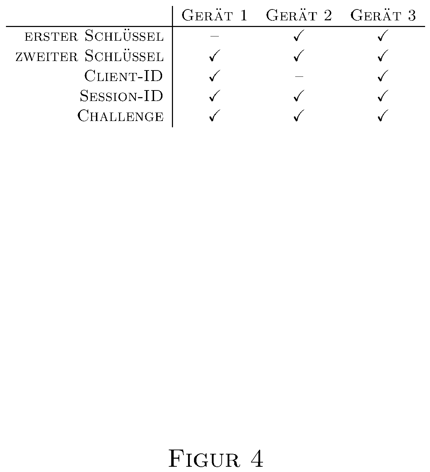

Figur 4 zeigt eine Tabelle, in der die gemeinsamen Geheimnisse und Kennzahlen der beteiligten Geräte zusammengefasst sind. Der erste Schlüssel ist nur dem zweiten und dem dritten Gerät bekannt und dient zur Errichtung eines Vertrauensverhältnisses (trust) zwischen beiden Geräten. Der zweite Schlüssel wird vom dritten Gerät erzeugt und dient der vertraulichen Kommunikation zwischen erstem und zweitem Gerät. Die Client-ID dient dem ersten Gerät zur Authentifizierung gegenüber dem dritten Gerät und ist dem zweiten Gerät nicht bekannt. Die Session-ID und die Challenge ist allen Geräten bekannt und wird nicht weiter geschützt.

Ausführungsformen der Erfindung umfassen auch computerlesbare Medien mit darauf gespeicherten Befehlen, die, wenn sie durch einen oder mehrere Prozessoren in einem oder mehreren Geräten ausgeführt werden, die oben beschriebenen Verfahren ausführen.

Die hier beschriebenen Verfahren und Systeme ermöglichen die Prüfung einer Anfrage durch mehrere Geräte, die nicht direkt miteinander kommunizieren können. Die Erfindung verwendet hierzu als Umweg eine Umleitung der Kommunikation über das anfragende Gerät selbst und stellt sicher, dass die Kommunikation zwischen allen Geräten unverfälscht übertragen wird. Insbesondere wird sichergestellt, dass die Anfragen, die ein Gerät nach einer Umleitung erreichen, tatsächlich von dem vorgeblichen Gerät stammen. Die Erfindung vermeidet die Verwendung aufwendiger asymmetrischer Verschlüsselungen und eignet sich somit zur Anwendung in Geräten mit eingeschränkten Leistungs- und Rechenkapazitäten.

Die Erfindung beruht insbesondere auf der Überlegung, dass Kommunikationen in ungesicherten öffentlichen Netzwerken grundsätzlich für Dritte eingesehen und auch von diesen manipuliert werden können. Somit müssen die Kommunikationen zwischen allen beteiligten Geräten in geeigneter Weise gesichert werden. Das anfragende (erste) Gerät ist demjenigen (zweiten) Gerät, dass die Anfrage beantwortet, nicht bekannt, so dass beide anfänglich nicht auf ein gemeinsames Geheimnis zurückgreifen können, um sich gegenseitig zu authentifizieren und ihre Kommunikation vertraulich zu verschlüsseln. Die bekannten Verfahren zum Austausch eines gemeinsamen Geheimnisses, beispielsweise Diffie-Hellman-Verfahren, basieren auf aufwendigen asymmetrischen Verschlüsselungen und auf der Übertragung größerer Datenmengen und sollen mit der Erfindung vermieden werden. Dies wird erfindungsgemäß erzielt durch die hier beschriebene Client-ID, die durch ein weiteres (drittes) Gerät mittels eines Einwegalgorithmus' geprüft wird. Zugleich wird eine Challenge verwendet, die wiederum ein Vertrauensverhältnis zwischen dem zweiten und dem dritten Gerät herstellt. Beide Werte werden durch jeweilige Schlüssel gesichert, die nur den jeweiligen Geheimnisträgern bekannt sind. Das dritte Gerät verteilt im Laufe des Verfahrens dabei einen Schlüssel an das erste und zweite Gerät, mit dem diese fortan vertraulich kommunizieren können. Die Erfindung vermeidet eine Übertragung der Client-ID über die womöglich ungesicherte Verbindung zwischen dem anfragenden (ersten) Gerät und dem zweiten Gerät.

## Patentansprüche

1. Verfahren, umfassend:
durch ein erstes Gerät Erzeugen einer ersten Session-ID anhand einer Client-ID und Senden der ersten Session-ID über eine erste Verbindung an ein zweites Gerät;
durch das zweite Gerät Anwenden eines ersten Schlüssels auf die erste Session-ID und eine Challenge, Speichern der Challenge, und Senden der mit dem ersten Schlüssel bearbeiteten Daten über die erste Verbindung an das erste Gerät;
durch das erste Gerät Senden der bearbeiteten Daten sowie der Client-ID über eine zweite Verbindung an ein drittes Gerät;
durch das dritte Gerät Prüfen der Authentizität der bearbeiteten Daten unter Verwendung des ersten Schlüssels, Erzeugen einer zweiten Session-ID anhand der Client-ID, Vergleichen der zweiten Session-ID mit der ersten Session-ID, Prüfen, ob eine Ressource freigegeben wird, Erzeugen eines zweiten Schlüssels, Verschlüsseln des zweiten Schlüssels mit dem ersten Schlüssel und Anwenden des ersten Schlüssels auf die Challenge und den verschlüsselten zweiten Schlüssel, und Senden der mit dem ersten Schlüssel bearbeiteten Daten sowie des unverschlüsselten zweiten Schlüssels über die zweite Verbindung an das erste Gerät;
durch das erste Gerät Senden der bearbeiteten Daten über die erste Verbindung an das zweite Gerät;
durch das zweite Gerät Prüfen der Authentizität der bearbeiteten Daten durch Anwenden des ersten Schlüssels, Vergleichen der Challenge mit der gespeicherten Challenge, Entschlüsseln des zweiten Schlüssels, Verschlüsseln einer Ressource mit dem zweiten Schlüssel, und Senden der Ressource über die erste Verbindung an das erste Gerät.

2. Verfahren nach Anspruch 1, ferner umfassend Entschlüsseln der Ressource unter Verwendung des zweiten Schlüssels durch das erste Gerät.

3. Verfahren nach Anspruch 1 oder 2, wobei das Senden der ersten Session-ID durch das erste Gerät an das zweite Gerät auch Senden einer Angabe einer angeforderten Ressource umfasst und das Prüfen der Freigabe durch das dritte Gerät ferner anhand der Angabe der Ressource vorgenommen wird.

4. Verfahren nach einem der vorstehenden Ansprüche, wobei die erste Verbindung in der Transportschicht ungesichert und die zweite Verbindung in der Transportschicht mittels Verschlüsselung gesichert ist.

5. Verfahren nach einem der vorstehenden Ansprüche, wobei das Anwenden des ersten Schlüssels Signieren, Verschlüsseln und/oder Erzeugen eines MAC, Message Authentication Code, umfasst.

6. Verfahren nach einem der vorstehenden Ansprüche, wobei das Erzeugen der Session-IDs Anwenden einer Einwegfunktion umfasst.

7. Verfahren nach einem der Ansprüche 1 bis 5, wobei die Client-ID ein Schlüssel ist und das Erzeugen der Session-IDs Verschlüsseln einer vorbestimmten Konstante unter Verwendung der Client-ID umfasst.

8. Verfahren nach einem der Ansprüche 1 bis 6, wobei die Client-ID eine Zufallszahl ist.

9. Verfahren nach einem der vorstehenden Ansprüche, wobei die Challenge einen Zeitstempel enthält und wobei das Vergleichen der Challenge mit der gespeicherten Challenge eine Prüfung des Alters des Zeitstempels umfasst.

10. Verfahren nach einem der vorstehenden Ansprüche, wobei das Vergleichen der Challenge mit der gespeicherten Challenge umfasst, die Challenge mit mehreren Challenges in dem zweiten Gerät zu vergleichen, wobei jede der Challenges einer jeweiligen Anforderung eines Geräts entspricht.

11. Verfahren nach einem der vorstehenden Ansprüche, wobei der erste Schlüssel eine symmetrische Verschlüsselung ermöglicht und herstellerseitig in dem zweiten und dem dritten Gerät gespeichert ist oder vor Durchführung des Verfahrens durch eine temporäre direkte Verbindung zwischen dem zweiten und dem dritten Gerät übermittelt wird.

12. Verfahren nach einem der vorstehenden Ansprüche, wobei das Erzeugen der ersten Session-ID und das Erzeugen der zweiten Session-ID durch einen gleichen vorbestimmten Algorithmus erfolgt.

13. Verfahren nach Anspruch 12, wobei der Algorithmus in dem ersten Gerät und dem dritten Gerät herstellerseitig eingestellt ist oder vor Durchführung des Verfahrens durch eine direkte Verbindung zwischen dem ersten Gerät und dem dritten Gerät übermittelt oder eingestellt wird.

14. System, umfassend:
ein erstes Gerät, ein zweites Gerät, ein drittes Gerät;
wobei das erste Gerät mit dem zweiten und dem dritten Gerät verbunden ist;
wobei das erste Gerät eingerichtet ist, anhand einer Client-ID eine erste Session-ID zu erzeugen und die erste Session-ID an das zweite Gerät zu senden;
wobei das zweite Gerät eingerichtet ist, einen ersten Schlüssel auf die erste Session-ID und eine Challenge anzuwenden, die Challenge zu speichern und die mit dem ersten Schlüssel bearbeiteten Daten an das erste Gerät zu senden;
wobei das erste Gerät ferner eingerichtet ist, die bearbeiteten Daten sowie die Client-ID an das dritte Gerät zu senden;
wobei das dritte Gerät eingerichtet ist, die Authentizität der bearbeiteten Daten unter Verwendung des ersten Schlüssel zu prüfen, anhand der Client-ID eine zweite Session-ID zu erzeugen, die zweite Session-ID mit der ersten Session-ID zu vergleichen, einen zweiten Schlüssel zu erzeugen, den zweiten Schlüssel unter Verwendung des ersten Schlüssels zu verschlüsseln, den ersten Schlüssel auf die Challenge und den verschlüsselten zweiten Schlüssel anzuwenden, und die mit dem ersten Schlüssel bearbeiteten Daten und den unverschlüsselten zweiten Schlüssel an das erste Gerät zu senden;
wobei das erste Gerät ferner eingerichtet ist, die bearbeiteten Daten an das zweite Gerät zu senden; und
wobei das zweite Gerät ferner eingerichtet ist, die Authentizität der bearbeiteten Daten durch Anwenden des ersten Schlüssels zu prüfen, die Challenge mit der gespeicherten Challenge zu vergleichen, den zweiten Schlüssel unter Verwendung des ersten Schlüssels zu entschlüsseln und eine Ressource mit dem zweiten Schlüssel zu verschlüsseln und an das erste Gerät zu senden.

15. Computerlesbares Medium mit darauf gespeicherten Befehlen, die bei ihrer Ausführung durch einen Prozessor das Verfahren nach einem der Ansprüche 1 bis 13 durchführen.
